(19) **Europäisches Patentamt**
**European Patent Office**
**Office européen des brevets**

(11) **EP 2 112 004 B1**

(12) **EUROPEAN PATENT SPECIFICATION**

(45) Date of publication and mention
of the grant of the patent:
**27.06.2012 Bulletin 2012/26**

(51) Int Cl.:
*B60C 9/08* (2006.01)   *B60C 9/18* (2006.01)
*B60C 9/28* (2006.01)   *B60C 11/00* (2006.01)
*B60C 11/04* (2006.01)

(21) Application number: **08711308.0**

(22) Date of filing: **14.02.2008**

(86) International application number:
**PCT/JP2008/052472**

(87) International publication number:
**WO 2008/099899 (21.08.2008 Gazette 2008/34)**

(54) **PNEUMATIC TIRE**

LUFTREIFEN

PNEU

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **14.02.2007 JP 2007033536**

(43) Date of publication of application:
**28.10.2009 Bulletin 2009/44**

(73) Proprietor: **Bridgestone Corporation
Tokyo 104-8340 (JP)**

(72) Inventor: **The designation of the inventor has not
yet been filed**

(74) Representative: **Oxley, Robin John George et al
Marks & Clerk LLP
90 Long Acre
London
WC2E 9RA (GB)**

(56) References cited:
**EP-A2- 0 658 450    JP-A- 01 285 404
JP-A- 04 005 107    JP-A- 07 144 507
JP-A- 54 064 303    JP-A- 63 199 102
US-A- 3 310 094**

## Description

### TECHNICAL FIELD

The present invention relates to a pneumatic tire, and particularly to a pneumatic tire capable of reconciling its driving stability and rolling resistance at a higher level.

### BACKGROUND ART

In recent years, various proposals have been made on a pneumatic tire which reduces: a rolling resistance caused on a tread contact patch which makes contact with a road surface; a rolling resistance caused due to deformation of the pneumatic tire itself; and the like.

For instance, a pneumatic tire has been disclosed in which a specification is imposed on the curvature radius of a buttress part between the tread contact patch and a sidewall part, and on the thickness of the carcass layer on the inner side in the radial direction of the tire in the cross section of the tire taken in the tread width direction (see JP-A Sho 59-48204, for example). Another pneumatic tire is disclosed in EP-A-0658450.

However, the conventional pneumatic tire has poor strength against a lateral force which is applied thereto in the lateral direction during cornering, and thus is incapable of securing the lateral rigidity. That is because the specifications are imposed on the curvature radius of the buttress part and on the thickness of the carcass layer on the inner side in the radial direction of the tire in the cross section of the tire taken in the tread width direction. As a result, the conventional pneumatic tire may reduce its driving stability in some cases. In fact, it is very difficult to reconcile this driving stability and the rolling resistance with each other at a higher level.

The present invention has been made with the forgoing situation taken into consideration. An object of the present invention is to provide a pneumatic tire capable of reconciling its driving stability and rolling resistance at a higher level.

### DISCLOSURE OF THE INVENTION

According to the present invention, there is provided a pneumatic tire as claimed in claim 1.

Here, a "standard rim (normal rim) " is the rim specified in the Year Book 2004 of JATMA (Japan Automobile Tyre Manufacturers Association) . A standard inner pressure (normal inner pressure) is an air pressure corresponding to maximum load capability in the Year Book of JATMA (Japan Automobile Tyre Manufacturers Association) . A "standard load (normal load) " is a load corresponding to a maximum load capability in the case where a single tire in the Year Book 2004 of JATMA (Japan Automobile Tyre Manufacturers Association) is applied.

Outside Japan, a load is a maximum load (maximum load capability) of a single tire described in the following standard. An inner pressure is an air pressure corresponding to a maximum load (maximum load capability) of the tire described in the following standard. A rim is a standard rim (or an "Approved Rim", "Recommended Rim") in an application size.

A standard depends on a standard which is effective in a region where a tire is produced or used. For example, a standard in the Unites States is the Year Book of "The Tire and Rim Association Inc. ". A standard in Europe is the Standards Manual of "The European Tire and Rim Technical Organization".

According to the feature above, it is possible to appropriately distribute the tension throughout the cross-section of the tire, and to appropriately place the belt layer and the tread contact patch, since the outer carcass line extends along the natural equilibrium profile curve. Accordingly, it is possible to reduce the rolling resistance and the like.

In addition, each of the belt normal-line distance, the reinforcement layer normal-line distance and the tread normal-line distance in the area between the lamination end and the tire equatorial line is constant, or becomes shorter from the tire equatorial line toward the outside in the tread width direction. This makes it possible for the pneumatic tire to increase the belt tension which is caused in the shoulder part when load is imposed thereon, and to increase its strength against the lateral force which is applied thereto in the lateral direction during a cornering. This sufficiently secures the lateral rigidity, and thereby increases the driving stability. Particularly, this enhances the cornering characteristic, because this makes a lateral force (a cornering force) smoothly rise during a cornering and a lane changing.

Another aspect of the present invention is summarized as each of the belt normal-line distance and the tread normal-line distance in a range whose width is 30% to 90% of the width of the crossover area is constant or becomes shorter from the tire equatorial line toward the outside in the tread width direction.

According to the feature above, each of the belt normal-line distance, the reinforcement layer normal-line distance and the tread normal-line distance in the range whose width is 30% to 90% of the width of the crossover area is constant, or becomes shorter from the tire equatorial line toward the outside in the tread width direction. This makes it possible to further efficiently reconcile the driving stability and rolling resistance with each other at a higher level.

Another aspect of the present invention is summarized as further comprising a belt reinforcement layer which is provided at the outer side of the second belt layer in the tire radial direction, wherein a reinforcement layer normal-line distance is constant between the lamination end and the tire equatorial line, the reinforcement layer normal-line distance being a distance from the belt reinforcement layer to the outer carcass line on the normal line.

Another aspect of the present invention is summarized as a folded-back end part being an end portion of the carcass layer which turns around the bead core is folded back to the position corresponding to the tire maximum width.

Another aspect of the present invention is summarized as the pneumatic tire is a radial tire mounted to a passenger car.

BRIEF DESCRIPTION OF THE DRAWINGS

[Fig. 1] Fig. 1 is a cross-sectional view of a pneumatic tire according to the embodiment taken in the tread width direction.

[Fig. 2] Fig. 2 is a top view showing a carcass layer and a belt layer of the pneumatic tire according to the embodiment.

[Fig. 3] Fig. 3 is a schematic diagram (part 1) showing a carcass line which is a line passing through the center of the carcass layer of the pneumatic tire according to the embodiment.

[Fig. 4] Fig. 4 is a schematic diagram (part 2) showing a carcass line which is a line passing through the center of the carcass layer of the pneumatic tire according to the embodiment.

[Fig. 5] Fig. 5 is a magnified, cross-sectional view of the pneumatic tire according to the embodiment taken in the tread width direction.

[Fig. 6] Fig. 6 is a graph (part 1) showing rolling resistances of pneumatic tires according to examples.

[Fig. 7] Fig. 7 is another graph (part 2) showing the rolling resistances of the pneumatic tires according to the examples.

[Fig. 8] Fig. 8 is a graph (part 1) showing cornering powers of the pneumatic tires according to the examples.

[Fig. 9] Fig. 9 is another graph (part 2) showing the cornering powers of the pneumatic tires according to the examples.

BEST MODES FOR CARRYING OUT THE INVENTION

Next, referring to the drawings, descriptions will be provided for an example of a pneumatic tire according to the present invention. In the following description of the drawings, the same or similar parts will be denoted by the same or similar reference numerals. It should be noted, however, that the drawings are schematic, and that dimensional ratios among parts are different from real ones. Thus, specific dimensions shall be judged with the following descriptions being taken into consideration. Furthermore, dimensional relationships and ratios among parts are different from one drawing to another.

(Configuration of Pneumatic Tire)

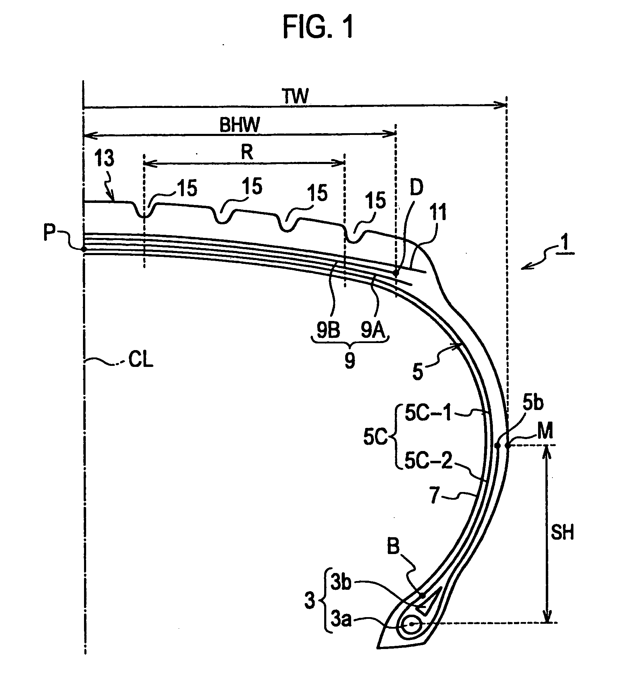

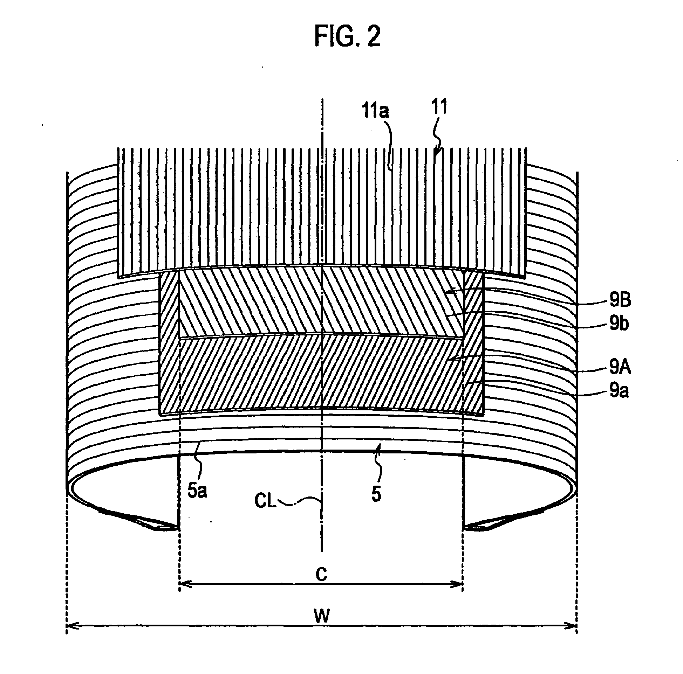

First of all, referring to the drawings, descriptions will be provided for a configuration of the pneumatic tire according to this embodiment. Fig. 1 is a cross-sectional view of the pneumatic tire according to this embodiment which is taken in the tread width direction. Fig. 2 is a top view showing a carcass layer and a belt layer of the pneumatic tire according to this embodiment. Note that the pneumatic tire according to this embodiment is a radial tire installed in a passenger car.

As shown in Figs. 1 and 2, a pneumatic tire 1 includes paired bead parts 3 each including at least a bead core 3a and a bead filler 3b. The pneumatic tire 1 further includes a carcass layer 5. The carcass layer 5 is folded back around the bead core 3a from the inside to outside of the pneumatic tire 1 in the tread width direction. The carcass layer 5 includes carcass cords 5a which are placed almost perpendicular to the tire circumferential direction.

A folded-back end part 5b is an end portion of this carcass layer 5 which turns around the bead core 3a. The folded-back end part 5b is folded back to a position M where a width TW of the tire is maximum. In other words, the folded-back end part 5b is folded back by a height SH from the center of the bead core 3a to the position M of the tire maximum width TW.

An inner liner 7 is provided at the inner side of the carcass layer 5 in the tire radial direction. The inner layer 7 is a highly air-tight rubber layer which is equivalent to a tube. A belt layer 9 (including a first belt layer 9A and a second belt layer 9B) is provided at the outer side of the carcass layer 5 in the tire radial direction.

The first belt layer 9A is placed at the outer side of the carcass layer 5 in the tire radial direction. In the first belt layer 9A, as shown in Fig. 2, first cords 9a are placed obliquely relative to the tire circumferential direction.

The second belt layer 9B is placed at the outer side of the first belt layer 9A in the tire radial direction. In the second belt layer 9B, as shown in Fig. 2, second cords 9b are placed obliquely relative to the tire circumferential direction, and the second cords 9b are placed in such a way as to cross the first cords 9a.

A belt reinforcement layer 11 for reinforcing the belt layer 9 is provided at the outer side of the second belt layer 9B in the tire radial direction. In this belt reinforcement layer 11, as shown in Fig. 2, reinforcement cords 11a are placed almost in parallel with the tire circumferential direction. In addition, a tread contact patch 13 which contacts the road surface is provided at the outer side of the belt reinforcement layer 11 in the tire radial direction.

(Configuration of Carcass Layer)

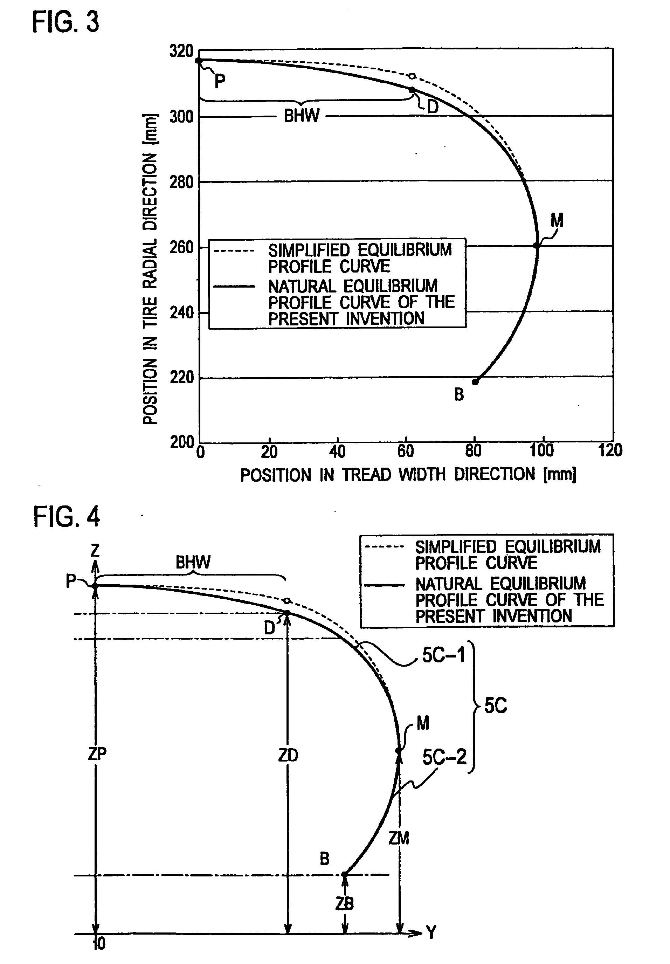

Next, descriptions will be provided for a concrete configuration of the above-mentioned carcass layer 5. Figs. 3 and 4 are schematic diagrams each showing a carcass line which is a line passing through the center of the carcass layer of the pneumatic tire according to this embodiment.

The carcass 5 has a shape extending along a carcass line 5C which is the line passing through the center of the carcass layer 5. In the carcass line 5C, an outer carcass line 5C-1 extends from the position M of the tire maximum width TW along the outer side in the radial direction of the tire. When the pneumatic tire mounted on a standard rim is inflated to a standard inner pressure, this outer carcass line 5C-1 extends along a natural equilibrium profile curve.

In the carcass line 5C, an inner carcass line 5C-2 extends from the position M of the tire maximum width TW along the inner side in the radial direction of the tire. When the pneumatic tire mounted on the standard rim is inflated to the standard inner pressure, this inner carcass line 5C-2 may, but does not necessarily have to, extend along the natural equilibrium profile curve.

In this respect, the natural equilibrium profile curve means a curve having a shape achieved when the tension in the carcass layer 5 is balanced. Specifically, the natural equilibrium profile curve means a curve (i.e., equilibrium carcass line) formed in a case where, when the pneumatic tire 1 is inflated to the standard inner pressure, the tension of the carcass layer 5 balances with the inner pressure and a reaction force generated in a region in which the carcass layer 5 overlaps the belt layer 9 with substantially no other force acting on the tension.

Concretely, the natural equilibrium profile curve of the present invention is a curve extending inward in the tire radial direction than an equilibrium profile curve (hereinafter referred to as a "simplified equilibrium profile curve") by 3% to 6% of the width of a crossover area BHW in which the first belt layer 9A and the second belt layer 9B cross each other between a tire equatorial line CL and the lamination end D, the simplified equilibrium profile curve being obtained on the basis of a conventionally-known theory on natural equilibrium shape.

First of all, descriptions will be provided for the conventionally-known simplified equilibrium profile curve (simplified equilibrium shape). The simplified equilibrium profile curve is a curve indicating that the segments of the carcass line 5C (including the outer carcass line 5C-1 and the inner carcass line 5C-2) have their respective inner pressure distributions which are expressed with the following expressions (Expression 1 to Expression 8) after the filling of an inner pressure.

Specifically, the curve representing the inextensible carcass line 5C lying from an equatorial midpoint P to the bead part 3 complies with the simplified equilibrium profile curve. In this respect, the equatorial midpoint P is that at which the carcass line 5C and the tire equatorial line CL cross each other. The bead part 3 includes the bead core 3a which does not change its shape due to the belt layer 9.

"P0" denotes an inner pressure at the time of filling of the inner pressure. "Pb" denotes an inner pressure which is withstood by a segment (a P-to-D segment) from the equatorial midpoint P to the lamination end D. "Ps" denotes an inner pressure which is withstood by a segment (a D-to-B segment) from the lamination end D to an inflection point B at which the bead part 3 and a rim (not illustrated) are in contact with each other and the carcass line 5C is redirected. "$T_0$" denotes a rate at which the equatorial midpoint P bears the tension applied on the carcass cord 5a located in the crossover area BHW. "$T_0$-$A_0$" denotes a rate at which the lamination end D bears the tension applied on the carcass cord 5a located in the crossover area BHW. In this respect, $A_0=T_0$ holds true because a tension borne by the lamination end D is usually zero in a laminated belt.

The distribution of inner pressure withstood by the segment (P-to-D segment) from the equatorial midpoint P to the lamination end D is expressed with

[Mathematical Expression 1]

$$Pb = P0\left(\left(1 - T_0\right) + A_0\left(\left(z_p - z\right)/\left(z_p - z_d\right)\right)^2\right). \qquad \dots \text{Eq. 1}$$

As shown by the broken line in Figs. 3 and 4, the distribution of inner pressure represents a gentle parabolic shape from the equatorial midpoint P to the lamination end D. Note that the distribution of inner pressure withstood by the segment (D-to-B segment) from the lamination end D to the inflection point B is expressed with $P_s=P0$.

On the basis of these relationships, simplified equilibrium profile curves concerning the segment (D-to-B segment) from the lamination end D to the inflection point B and concerning the segment (P-to-D segment) from the equatorial midpoint P to the lamination end D can be expressed with the following integral expressions (Eq. 2 to Eq. 4) on the basis of geometric differentiations of the respective segments.

Firstly, a relational expression concerning the segment (D-to-B segment) from the lamination end D to the inflection point B is expressed with

[Mathematical Expression 2]

$$\text{D-to-B segment} = \frac{Z^2 - Z_m{}^2}{B} \qquad \text{... Eq. 2}$$

where

[Mathematical Expression 3]

$$B = Z_d{}^2 - Z_m{}^2 + \left(1 - T_0 + \frac{z_p}{z_p - z_d} A_0\right)\left(z_p{}^2 - z_d{}^2\right) - \frac{2}{3} A_0 \left(\frac{z_p{}^3 - z_d{}^3}{z_p - z_d}\right). \qquad \text{... Eq. 3}$$

A relational expression concerning the segment (P-to-D) from the equatorial midpoint P to the lamination end D is expressed with

[Mathematical Expression 4]

$$\text{P-to-D segment} =$$

$$\frac{1}{B}\left[z_d{}^2 - z_m{}^2\left(1 - T_0 + \frac{z_p}{z_p - z_d} A_0\right)\left(z^2 - z_d{}^2\right) - \frac{2}{3} A_0\left(\frac{z^3 - z_d{}^3}{z_p - z_d}\right)\right]. \qquad \text{... Eq. 4}$$

By use of Eq. 3 and Eq. 4, the simplified equilibrium profile curve concerning the section (P-to-D section) from the equatorial midpoint P to the lamination end D can be expressed with

[Mathematical Expression 5]

$$y = -\int_{z_p}^{z} G_1(z)\,dz \qquad \text{... Eq. 5}$$

where

[Mathematical Expression 6]

$$G_1(z) = \left[ z_d{}^2 - z_m{}^2 + \left( 1 - T_0 + \frac{z_p}{z_p - z_d} A_0 \right)\left( z^2 - z_d{}^2 \right) - \frac{2}{3} A_0 \left( \frac{z^3 - z_d{}^3}{z_p - z_d} \right) \right]$$

$$\times \left[ B^2 - \left( z_d{}^2 - z_m{}^2 + \left( 1 - T_0 + \frac{z_p}{z_p - z_d} A_0 \right)\left( z^2 - z_d{}^2 \right) - \frac{2}{3} A_0 \left( \frac{z^3 - z_d{}^3}{z_p - z_d} \right) \right)^2 \right]^{-\frac{1}{2}} \cdot$$

... Eq. 6

On the other hand, the simplified equilibrium profile curve concerning the segment (D-to-B segment) from the lamination end D to the inflection point B can be expressed with

[Mathematical Expression 7]

$$y = -\int_{z_p}^{z_d} G_1(z)\,dz - \int_{z_d}^{z} G_2(z)\,dz \qquad\qquad \text{... Eq. 7}$$

where

[Mathematical Expression 8]

$$G_2(z) = \left( z^2 - z_m{}^2 \right)\left[ B^2 - \left( z_d{}^2 - z_m{}^2 \right)^2 \right]^{-\frac{1}{2}} \cdot \qquad\qquad \text{... Eq. 8}$$

As described above, the simplified equilibrium profile curve concerning the sections from the equatorial midpoint P to the inflection point B through the lamination end D and the position M of the tire maximum width TW has a continuous and smooth shape as shown by the broken lines of Figs. 3 and 4 on the basis of Eq. 5 and Eq. 7 mentioned above.

Nevertheless, the inventors have found a fact that, even when the carcass layer 5 formed in a way that the carcass line 5C extends along the conventionally-known simplified equilibrium profile curve is applied to a recently-prevailing pneumatic tire with a low aspect ratio, the pneumatic tire cannot take a shape achieved when the tension in the carcass layer 5 is balanced. Due to this, the thus-formed pneumatic tire cannot be expected to increase the belt tension which is caused in the shoulder part when load is imposed thereon, and its strength against a lateral force which is applied thereto in the lateral direction during a cornering. Accordingly, the pneumatic tire secures the lateral rigidity insufficiently. As a result, the pneumatic tire does not enhance the driving stability.

On the basis of this condition, the inventors have made an analysis on the conventionally-known simplified equilibrium profile curve. As a result, the inventors have found a fact that the driving stability and the rolling resistance can be reconciled with each other at a higher level when the carcass line 5C is caused to pass through the lamination end D which is located inward in the tire radial direction than the simplified equilibrium profile curve by 3% to 6% of the width of the crossover area BHW.

In essence, when the pneumatic tire mounted on the standard rim is inflated to the standard inner pressure, the carcass line 5C is caused to pass through the lamination end D which is located inward in the tire radial direction than the simplified equilibrium profile curve by 3% to 6% of the width of the crossover area BHW.

Note that the section (the P-to-D section) from the equatorial midpoint P to the lamination end D and the section (the P-to-M section) from the equatorial midpoint P to the position M of the tire maximum width TW of this natural equilibrium profile curve always run on the simplified equilibrium profile curve or inside the simplified equilibrium profile curve in the tire radial direction. Furthermore, this natural equilibrium profile curve continuously and smoothly extends in the section (the P-to-D-to-M section) from the equatorial midpoint P to the position M of the tire maximum width TW through the lamination end D.

If the natural equilibrium profile curve is shifted by less than 3% under the above-described conditions, the natural equilibrium profile remains close to the conventionally-known simplified equilibrium profile curve. As a result, such a pneumatic tire cannot be expected to increase the belt tension in the shoulder part and its strength against the lateral force which is applied thereto in the lateral direction during a cornering. On the contrary, if the natural equilibrium profile curve is shifted by more than 6% under the above-described conditions, the pneumatic tire does not take a shape achieved when the tension in the carcass layer 5 is balanced, resulting in a decrease in its driving stability.

As described above, the natural equilibrium profile curve of the present invention represents a curve passing through the lamination end D which is located inward in the tire radial direction than the simplified equilibrium profile curve by 3% to 6% of the width of the crossover area BHW. In other words, the natural equilibrium profile curve of the present invention can be termed as a "natural equilibrium profile curve (natural equilibrium shape)," because it is the curve formed in a way that the tension in the carcass layer 5 is balanced.

On the contrary, the simplified equilibrium profile curve cannot be termed as a "natural equilibrium profile curve (natural equilibrium shape), " because it is not the curve formed in a way that the tension in the carcass layer 5 is balanced.

For this reason, the "natural equilibrium profile curve" described in claim 1 of this application is the natural equilibrium profile curve in which the tension of the carcass layer 5 is balanced, but not the conventionally-known simplified equilibrium profile curve.

(Configurations of Belt Layer, Belt Reinforcement Layer and Tread Contact Patch)

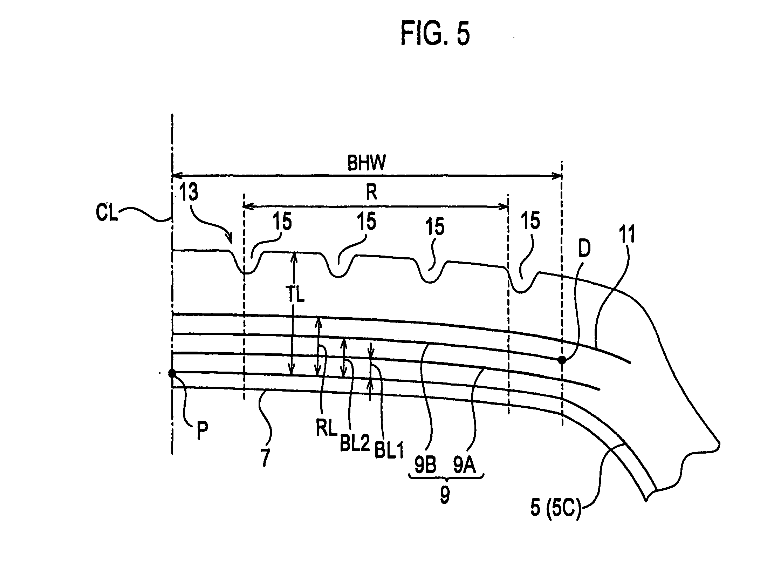

Next, descriptions will be provided for concrete configurations of the belt layer 9 (including the first belt layer 9A and the second belt layer 9B), the belt reinforcement layer 11 and the tread contact patch 13. Fig. 5 is a magnified, cross-sectional view of the pneumatic tire according to this embodiment which is taken in the tread width direction.

As shown in Fig. 5, a belt normal-line distance BL in an area between the lamination end D and the tire equatorial line CL is constant, or becomes shorter from the tire equatorial line CL toward the outside in the tread width direction, the belt normal-line distance BL representing a distance from the belt layer 9 (its center line) to the carcass line 5C on a line normal to the carcass line 5C.

Note that the belt normal-line distance BL includes: a first belt normal-line distance BL1 representing a distance from the first belt layer 9A (its center line) to the carcass line on the normal line; and a second belt normal-line distance BL2 representing a distance from the second belt layer 9B (its center line) to the carcass line on the normal line.

Similarly, a reinforcement layer normal-line distance RL in the area between the lamination end D and the tire equatorial line CL is constant, or becomes shorter from the tire equatorial line CL toward the outside in the tread width direction, the reinforcement layer normal-line distance RL representing a distance from the belt reinforcement layer 11 (its center line) to the carcass line 5C on the normal line.

Similarly, a tread normal-line distance TL in the area between the lamination end D and the tire equatorial line CL is constant, or becomes shorter from the tire equatorial line CL toward the outside in the tread width direction, the tread normal-line distance TL representing a distance from the tread contact patch 13 to the carcass line 5C on the normal line. In other words, a gauge thickness representing a thickness from the carcass layer 5 (the carcass line 5C) to the outermost position of the tread contact patch 13 in the crossover area BHW is constant, or becomes shorter from the tire equatorial line CL toward the outside in the tread width direction.

If each of the belt normal-line distance BL, the reinforcement layer normal-line distance RL and the tread normal-line distance TL in the area between the lamination end D and the tire equatorial line CL becomes longer from the tire equatorial line CL toward the outside in the tread width direction, the pneumatic tire is incapable of bearing the belt tension in the shoulder part when load is imposed thereon. In sum, each of the belt normal-line distance BL, the reinforcement layer normal-line distance RL and the tread normal-line distance TL in the area between the lamination end D and the tire equatorial line CL is preferably constant, or may become shorter from the tire equatorial line CL toward the outside in the tread width direction.

Particularly, it is desirable that each of the belt normal-line distance BL, the reinforcement layer normal-line distance RL and the tread normal-line distance TL be constant in a range R whose width is 30% to 90% of the width of the crossover area BHW. It is more desirable that each of the belt normal-line distance BL, the reinforcement layer normal-line distance RL and the tread normal-line distance TL be constant in a range R whose width is 60% to 80% of the width of the crossover area BHW.

If each normal-line distance is constant in a range whose width is less than 30% of the width of the crossover area BHW, the tension rigidity becomes larger in a range whose width from the tire equatorial line CL is one half of the width of the belt layer 9, in response to the change which occurs in the distribution of the tension of the belt layer 9 due to deformation of the tire when load is imposed on the tire. This makes it impossible to obtain a suitable distribution of the tension rigidity. This may make it difficult for the pneumatic tire to reconcile its driving stability and rolling resistance with each other at a higher level in some cases.

On the other hand, if each normal-line distance is constant in a range whose width is more than 90% of the width of the crossover area BHW, the tension rigidity becomes extremely larger in the end portion of the belt layer 9 in response to the change which occurs in the distribution of the tension of the belt layer 9 due to the deformation of the tire when load is imposed on the tire. This makes it impossible to obtain a suitable distribution of the tension rigidity. This may make it difficult for the pneumatic tire to reconcile its driving stability and rolling resistance with each other at a higher level in some cases.

In this respect, the pneumatic tire preferably forms circumferential-direction grooves 15 extending in the tire circumferential direction between the lamination end D and a farther end of the range R whose width is 60% to 80% of the width of the crossover area BHW, for the purpose of further increasing the belt tension which is caused in the shoulder part when load is imposed thereon, and its strength against the lateral force which is applied thereto in the lateral direction during a cornering.

(Operation and Effect)

The foregoing pneumatic tire 1 according to this embodiment described thus far is capable of appropriately distributing the tension throughout the cross-section of the tire, and of appropriately placing the belt layer 9 and the tread part 13, since the outer carcass line 5C extends along the natural equilibrium profile curve. Accordingly, the pneumatic tire 1 is capable of reducing the rolling resistance and the like.

In addition, each of the belt normal-line distance BL, the reinforcement layer normal-line distance RL and the tread normal-line distance TL in the area between the lamination end D and the tire equatorial line CL is constant, or becomes shorter from the tire equatorial line CL toward the outside in the tread width direction. This makes it possible for the pneumatic tire 1 to increase the belt tension which is caused in the shoulder part when load is imposed thereon, and to increase its strength against the lateral force which is applied thereto in the lateral direction during a cornering. This sufficiently secures the lateral rigidity, and thereby increases the driving stability. Particularly, this enhances the cornering characteristic, because this makes a lateral force (a cornering force) smoothly rise during a cornering and a lane changing.

In this respect, the positional association between the center and shoulder portions of the tread contact patch 13 in a tension distribution which occurs when the pneumatic tire is inflated to the standard inner pressure corresponds to the positional association between the center and shoulder portions of the tread contact patch 13 in a tension distribution which occurs when the standard load is imposed on the pneumatic tire.

For this reason, when the curvature radius of the outer carcass line 5C described above is decreased, the shoulder portion thereof is curved sharply, and the center portion thereof is compressed tightly. However, it is possible to increase the tension of the shoulder portion thereof to a large extent. Consequently, the increased tension makes it possible to enhance the cornering characteristic, particularly the cornering power, and accordingly to increase the driving stability.

In addition, each of the belt normal-line distance BL, the reinforcement layer normal-line distance RL and the tread normal-line distance TL in the range R whose width is 30% to 90% of the width of the crossover area BHW is constant, or becomes shorter from the tire equatorial line CL toward the outside in the tread width direction. This makes it possible to further efficiently reconcile the driving stability (particularly, the cornering characteristic) and rolling resistance with each other at a higher level.

Furthermore, the circumferential-direction grooves 15 are formed between the lamination end D and the farther end of the range R whose width is 60% to 80% of the width of the crossover area BHW. This increases the deflection and bending deformation of the shoulder part when load is imposed on the pneumatic tire, and accordingly increases the belt tension of the shoulder part. This increases the rigidity (strength) against the lateral force which is applied to the pneumatic tire in the lateral direction during a cornering, and accordingly enhances the driving stability.

In the pneumatic tire 1 according to this embodiment, as described above, the outer carcass line 5C extends along the natural equilibrium profile curve. In addition, each of the belt normal-line distance BL, the reinforcement layer normal-line distance RL and the tread normal-line distance TL in the area between the lamination end D and the equatorial line CL is constant, or becomes shorter from the tire equatorial line CL toward the outside in the tread width direction. This makes it possible for the pneumatic tire to reconcile its driving stability (particularly, the cornering characteristic) and rolling resistance with each other at a higher level.

[Other Embodiments]

The contents of the present invention have been disclosed through the embodiment of the present invention. However, the descriptions and drawings which constitute parts of this disclosure shall not be construed as limiting the present invention.

Specifically, the descriptions have been provided on the assumption that the pneumatic tire 1 is a radial tire. However, the pneumatic tire 1 is not limited to this, and may be any other tire (for instance, a bias tire) . In addition, the descriptions have been provided on the assumption that the pneumatic tire 1 is attached to a general passenger car (including a light car). However, what the pneumatic tire 1 is attached to is not limited to this. The pneumatic tire 1 may be attached to any other vehicle (such as a sport car, a bus, and a truck) of course.

Furthermore, the descriptions have been provided on the assumption that the folded-back end part 5b is folded back to the position M of the tire maximum width TW. However, what the folded-back end part 5b is folded back to is not limited to this. Naturally, the folded-back end part 5b may be folded back to a vicinity of the inflection point B at which the bead part 3 and a rim (not illustrated) are in contact with each other and the carcass line 5C is redirected.

From this disclosure, various alternative embodiments, examples and operational techniques will be clear to those skilled in this art. For this reason, the technical scope of the present invention shall be determined by only the matter to define the invention, which is relevant to the scope of claims, and which is reasonably understood on the basis of the foregoing descriptions.

EXAMPLES

Next, descriptions will be provided for a result of an experiment which was conducted on pneumatic tires according to the following comparative examples 1 and 2 and examples 1 to 3 for the purpose of more clarifying the effect of the present invention. It should be noted that the present invention is not limited to these examples.

Data on each pneumatic tire was measured under the following conditions.

The tire size: 205/55R16
The wheel size: 16×6.5JJ
The inner pressure condition: 230kPa

In the belt layer (the first belt layer and the second belt layer) of each pneumatic tire, 50 steel cords of 1×5 (0.25) structure were arranged per 50mm at an oblique angle of 25 degrees to the tire circumferential direction in a way that the first cords and the second cords cross each other (i.e., biased lamination) . Note that the width of the crossover area BHW was 100mm in each pneumatic tire.

Furthermore, in the carcass layer of each pneumatic tire, 40 cords made of polyester 1500D/2 were arranged per 50mm at an angle of about 90 degrees to the tire circumferential direction, and the folded-back end part 5b was folded back to the position M of the tire maximum width TW (i.e., carcass turn-up structure).

Moreover, in the bead part of each pneumatic tire, the bead core was made of a steel cord, and the hardness of the bead filler was 90 degrees on a JIS hardness scale. Note that the value on the JIS hardness scale was a value measured by an A-type durometer in accordance with a durometer hardness test method described in JIS K6253-1993 "Method of Testing Hardness of Vulcanized Rubber."

First of all, descriptions will be provided for the configuration of the pneumatic tire according to comparative example 1. In the pneumatic tire according to comparative example 1, the outer carcass line 5C did not run along the natural equilibrium profile curve when the pneumatic tire mounted on a standard rim was inflated to the standard inner pressure. Furthermore, in the pneumatic tire according to comparative example 1, each of the belt normal-line distance BL and the tread normal-line distance TL in the area between the lamination end D and the tire equatorial line CL was not constant.

In the pneumatic tire according to comparative example 1, when the pneumatic tire was inflated to the standard inner pressure, a distance (ZP) from a rim base line Y to the equatorial midpoint P was 317mm; a distance (ZD) from the rim base line Y to the lamination end D was 300mm; a distance (ZM) from the rim base line Y to the position M of the tire maximum width TW was 270mm; and a distance (ZB) from the rim base line Y to the inflection point B was 225mm (see Fig. 4).

Next, descriptions will be provided for the configuration of the pneumatic tire according to comparative example 2. In the pneumatic tire according to comparative example 2, the outer carcass line 5C ran along the conventionally-known simplified equilibrium profile curve when the pneumatic tire mounted on the standard rim was inflated to the standard inner pressure. Furthermore, in the pneumatic tire according to comparative example 2, each of the belt normal-line distance BL and the tread normal-line distance TL in the area between the lamination end D and the tire equatorial line CL was not constant.

In the pneumatic tire according to comparative example 2, when the pneumatic tire was inflated to the standard inner pressure, the distance (ZP) from the rim base line Y to the equatorial midpoint P was 317mm; the distance (ZD) from the rim base line Y to the lamination end D was 301mm; the distance (ZM) from the rim base line Y to the position M of the tire maximum width TW was 262mm; and the distance (ZB) from the rim base line Y to the inflection point B was 225mm (see Fig. 4).

Next, descriptions will be provided for the configuration of the pneumatic tire according to example 1. In the pneumatic tire according to example 1, the outer carcass line 5C ran along the natural equilibrium profile curve when the pneumatic tire mounted on the standard rim was inflated to the standard inner pressure. Specifically, in the pneumatic tire according to example 1, the carcass line 5C passed through the position of the lamination end D which was located inward by 5mm (5% of the width of the crossover area BHW) in the tire radial direction (in the perpendicular direction) than the simplified equilibrium profile curve. Furthermore, in the pneumatic tire according to example 1, each of the belt normal-line distance BL and the tread normal-line distance TL was constant in a range whose width was 70% of the width of the crossover area BHW.

In the pneumatic tire according to example 1, when the pneumatic tire was inflated to the standard inner pressure, the distance (ZP) from the rim base line Y to the equatorial midpoint P was 317mm; the distance (ZD) from the rim base line Y to the lamination end D was 295mm; the distance (ZM) from the rim base line Y to the position M of the tire maximum width TW was 260mm; and the distance (ZB) from the rim base line Y to the inflection point B was 225mm (see Fig. 4).

Next, descriptions will be provided for the configuration of the pneumatic tire according to example 2. In the pneumatic tire according to example 2, the outer carcass line 5C ran along the natural equilibrium profile curve when the pneumatic tire mounted on the standard rim was inflated to the standard inner pressure. Specifically, in the pneumatic tire according to example 2, the carcass line 5C passed through the position of the lamination end D which was located inward by 5mm (5% of the width of the crossover area BHW) in the tire radial direction (in the perpendicular direction) than the simplified equilibrium profile curve. Furthermore, in the pneumatic tire according to example 2, each of the belt normal-line distance BL and the tread normal-line distance TL was constant in a range whose width was 30% of the width of the crossover area BHW.

In the pneumatic tire according to example 2, when the pneumatic tire was inflated to the standard inner pressure, the distance (ZP) from the rim base line Y to the equatorial midpoint P was 317mm; the distance (ZD) from the rim base line Y to the lamination end D was 295mm; the distance (ZM) from the rim base line Y to the position M of the tire maximum width TW was 260mm; and the distance (ZB) from the rim base line Y to the inflection point B was 225mm (see Fig. 4).

Next, descriptions will be provided for the configuration of the pneumatic tire according to example 3. In the pneumatic tire according to example 3, the outer carcass line 5C ran along the natural equilibrium profile curve when the pneumatic tire mounted on the standard rim was inflated to the standard inner pressure. Specifically, in the pneumatic tire according to example 3, the carcass line 5C passed through the position of the lamination end D which was located inward by 5mm (5% of the width of the crossover area BHW) in the tire radial direction (in the perpendicular direction) than the simplified equilibrium profile curve. Furthermore, in the pneumatic tire according to example 3, each of the belt normal-line distance BL and the tread normal-line distance TL was constant in a range whose width was 90% of the width of the crossover area BHW.

In the pneumatic tire according to example 3, when the pneumatic tire was inflated to the standard inner pressure, the distance (ZP) from the rim base line Y to the equatorial midpoint P was 317mm; the distance (ZD) from the rim base line Y to the lamination end D was 295mm; the distance (ZM) from the rim base line Y to the position M of the tire maximum width TW was 260mm; and the distance (ZB) from the rim base line Y to the inflection point B was 225mm (see Fig. 4).

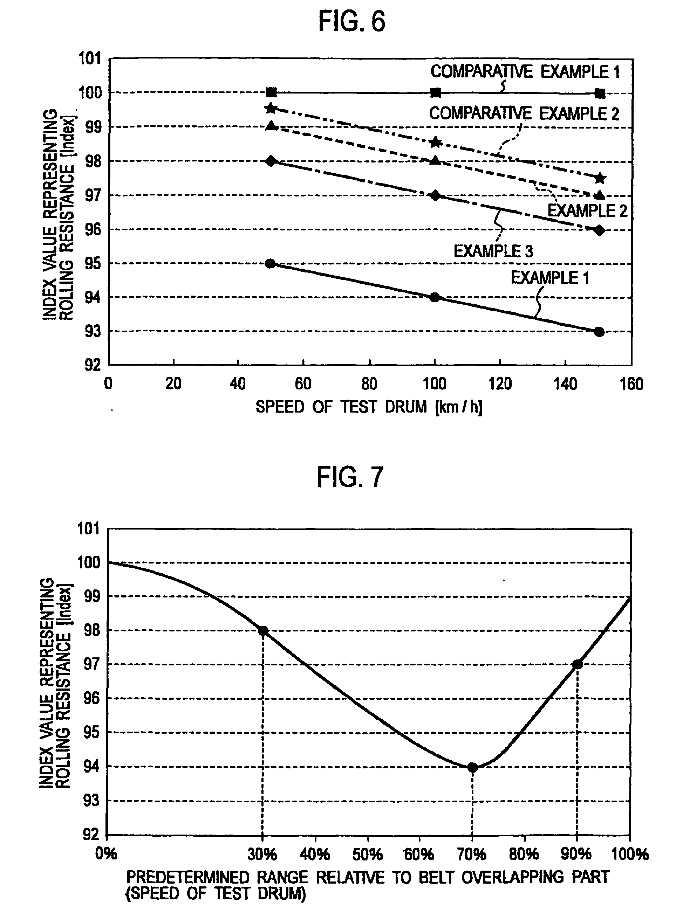

Referring to Figs. 6 to 8 and Table 1, descriptions will be provided for the rolling resistance and cornering characteristic of each of the thus-configured pneumatic tires according to comparative examples 1 and 2 as well as examples 1 to 3.

<Rolling Resistance>

The rolling resistance was measured by causing each pneumatic tire to run under three speed conditions of 50km/h, 100km/h and 150km/h with a load of 4000N while attaching the pneumatic tire to a steel drum testing machine with a diameter of 2000mm. While the rolling resistance of the run-flat tire according to comparative example 1 was indexed at 100, the rolling resistances of other pneumatic tires were evaluated by use of their respective comparative index values. Note that a larger index value means a larger rolling resistance.

As a result, it was found that each of the pneumatic tires according to examples 1 to 3 was capable of making its rolling resistance lower than those of the pneumatic tires according to comparative examples 1 and 2. Particularly, as shown in Figs. 6 and 7, it was found that each of the pneumatic tires according to examples 1 to 3 was capable of efficiently reducing its rolling resistance. That was because: the carcass line 5C ran along the natural equilibrium profile curve; and additionally, each of the belt normal-line distance BL and the tread normal-line distance TL was constant in the range R whose width was 30% to 90% (particularly, 60% to 80%) of the width of the crossover area BHW.

<Cornering Characteristic>

A cornering power (N/deg) representing a gradient of a cornering force (a force working at a right angle to the traveling direction and in the horizontal direction) (N) with respect to a slip angle (an angle of sideslip) when the slip angle was "zero degree" was obtained for each pneumatic tire through the test of the cornering force while the pneumatic tire was attached to a flat-belt testing machine. In this respect, the cornering force was a lateral force which occurred in the pneumatic tire when the slip angle was added to the pneumatic tire. While the cornering power of the run-flat tire according to comparative example 1 was indexed at 100, the cornering powers of other pneumatic tires were evaluated by use of their respective comparative index values. Note that a larger index value means a better cornering power.

## [Table 1]

|  | Comparative Example 1 | Comparative Example 2 | Example 1 | Example 2 | Example 3 |
|---|---|---|---|---|---|
| Cornering Power | 100 | 99 | 107 | 102 | 103 |

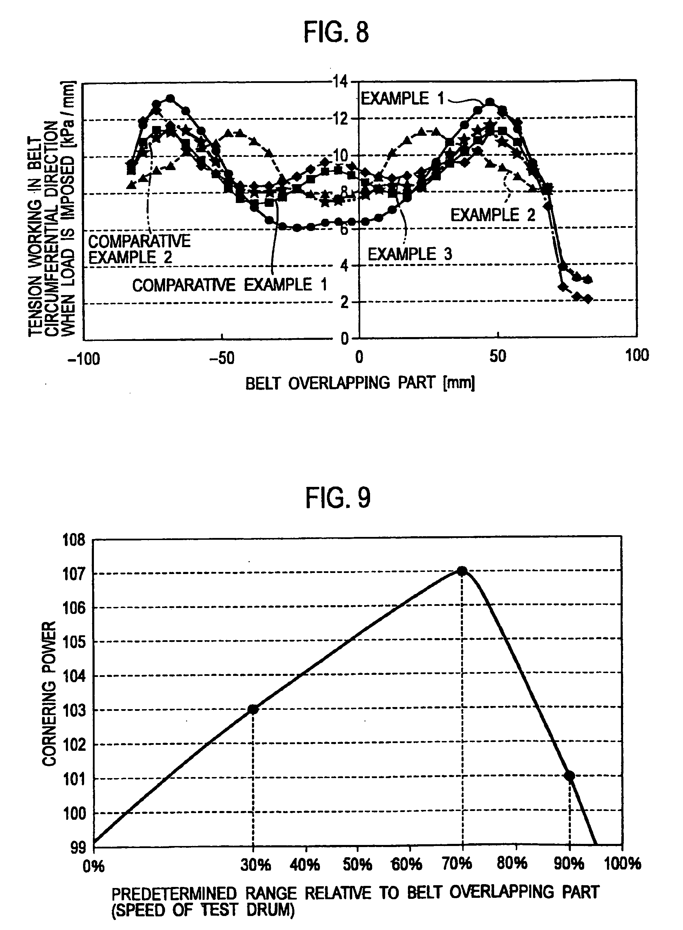

As a result of this, as shown in Table 1, it was found that the pneumatic tires according to examples 1 to 3 were capable of making their cornering characteristics better because their cornering powers were better than those of the pneumatic tires according to comparative examples 1 and 2. Particularly, as shown in Figs. 8 and 9, it was found that: each of the pneumatic tires according to examples 1 to 3 was capable of increasing the belt tension which was caused in its shoulder part when load was imposed thereon, and of increasing its strength against the lateral force which was applied thereto in the lateral direction during a cornering. This makes it possible to sufficiently secure the lateral rigidity, and accordingly to have better cornering power. That was because: the carcass line 5C ran along the natural equilibrium profile curve; and additionally, each of the belt normal-line distance BL and the tread normal-line distance TL was constant in the range R whose width was 30% to 90% (particularly, 60% to 80%) of the width of the crossover area BHW.

INDUSTRIAL APPLICABILITY

As described above, the pneumatic tire according to the present invention is capable of reconciling its driving stability and rolling resistance at a higher level. For this reason, the pneumatic tire according to the present invention is useful for a technique of manufacturing pneumatic tires and the like.

**Claims**

1.  A pneumatic tire (1) comprising: paired bead parts (3) each including at least a bead core (3a) and a bead filler (3b) ; and at least a carcass layer (5), a belt layer (9) and a tread contact patch (13)arranged from an inside to an outside in a radial direction of the tire (1), wherein
    the belt layer (9) includes: a first belt layer (9A) in which first cords (9a) are arranged obliquely relative to a tire circumferential direction; and a second belt layer (9B) in which second cords (9b) are arranged obliquely relative to the tire circumferential direction and are arranged in such a way as to cross the first cord (9a),
    a carcass line (5C) passing through the center of the carcass layer (5) including an outer carcass line (5C-1) extending from a position (M) at an outer side in the radial direction of the tire (1), where a width (TW) of the tire (1) is maximum, along a natural equilibrium profile curve having a shape achieved when a tension in the carcass layer (5) is balanced when the tire (1) mounted on a standard rim is inflated to a standard inner pressure, the natural equilibrium profile curve running inside the simplified equilibrium profile curve in the tire radial direction; and
    each of a belt normal-line distance (BL) and a tread normal-line distance (TL) in a crossover area (BHW) is constant or becomes shorter from a tire equatorial line (CL) toward an outside in a tread width direction, the belt normal-line distance (BL) being a distance from the belt layer (9) to the outer carcass line (5C-1) on a line normal to the carcass line (5C), the tread normal-line distance (TL) being a distance from the tread contact patch (13) to the outer carcass line (5C-1) on the normal line, the crossover area (BHW) being an area where the first belt layer (9A) and the second belt layer (9B) cross each other between the tire equatorial line (CL) and a lamination end (D); and

wherein a circumferential-direction groove (15) extending in the tire circumferential direction is formed in the crossover area (BHW) in a range (R) of 60% to 80% of the width of the crossover area (BHW) from an end of the crossover area (BHW).

2. The pneumatic tire (1) according to claim 1, wherein
each of the belt normal-line distance (BL) and the tread normal-line distance (TL) in a range whose width is 30% to 90% of the width of the crossover area (BHW) is constant or becomes shorter from the tire equatorial line (CL) toward the outside in the tread width direction.

3. The pneumatic tire (1) according to claim 1,
further comprising a belt reinforcement layer (11) which is provided at the outer side of the second belt layer (9B) in the tire radial direction, wherein
a reinforcement layer normal-line distance (RL) is constant between the lamination end (D) and the tire equatorial line (CL), the reinforcement layer normal-line distance (RL) being a distance from the belt reinforcement layer (11) to the outer carcass line (5C-1) on the normal line.

4. The pneumatic tire according to claim 1, wherein
a folded-back end part (5b) being an end portion of the carcass layer (5) which turns around the bead core (3) is folded back to the position corresponding to the tire maximum width (M).

5. The pneumatic tire (1) according to claim 1, wherein
the pneumatic tire is a radial tire mounted to a passenger car.

**Patentansprüche**

1. Luftreifen (1), der aufweist: paarweise angeordnete Wulstteile (3), von denen jedes mindestens einen Wulstkern (3a) und einen Kernreiter (3b) umfasst; und mindestens eine Karkassenlage (5), eine Gürtellage (9) und eine Laufflächenaufstandsfläche (13), die von einer Innenseite zu einer Außenseite in einer radialen Richtung des Reifens (1) angeordnet ist, wobei
die Gürtellage (9) umfasst: eine erste Gürtellage (9A), in der erste Korde (9a) schräg relativ zu einer Reifenumfangsrichtung angeordnet sind; und eine zweite Gürtellage (9B), in der zweite Korde (9b) schräg relativ zu der Reifenumfangsrichtung angeordnet sind und in einer derartigen Weise angeordnet sind, dass sie die ersten Korde (9a) kreuzen;
eine Karkassenlinie (5C) durch die Mitte der Karkassenlage (5) hindurchgeht, einschließlich einer äußeren Karkassenlinie (SC-1), die sich von einer Position (M) auf einer Außenseite in der radialen Richtung des Reifens (1), wobei eine Breite (TW) des Reifens (1) maximal ist, längs einer natürlichen Gleichgewichtsprofilkurve mit einer Form erstreckt, die erreicht wird, wenn eine Zugspannung in der Karkassenlage (5) ausgeglichen wird, wenn der Reifen (1), der auf einer Standardfelge montiert ist, auf einen Standardinnendruck aufgepumpt wird, wobei die natürliche Gleichgewichtsprofilkurve innerhalb der vereinfachten Gleichgewichtsprofilkurve in der radialen Richtung des Reifens verläuft; und
ein jeder von einem Gürtel-Normallinienabstand (BL) und einem Laufflächen-Normallinienabstand (TL) in einem Krepzungsbereich (BHW) konstant ist oder von einer Reifenäquatorlinie (CL) in Richtung einer Außenseite in einer Laufllächenbreitenrichtung kürzer wird, wobei der Gürtel-Normallinienabstand (BL) ein Abstand von der Gürtellage (9) zur äußeren Karkassenlinie (5C-1) auf einer Linie normal zur Karkassenlinie (5C) ist, wobei der Laufflächen-Normallinienabstand (TL) ein Abstand von der Laufflächenaufstandsfläche (13) zur äußeren Karkassenlinie (5C-1) auf der Normallinie ist, wobei der Kreuzungsbereich (BHW) ein Bereich ist, wo sich die erste Gürtellage (9A) und die zweite Gürtellage (9B) einander zwischen der Reifenäquatorlinie (CL) und einem Laminierende (D) kreuzen; und wobei eine Rille (15) in der Umfangsrichtung, die sich in der Reifenumfangsrichtung erstreckt, im Kreuzungsbereich (BHW) in einem Bereich (R) von 60 % bis 80 % der Breite des Kreuzungsbereiches (BHW) von einem Ende des Kreuzungsbereiches (BHW) aus gebildet wird.

2. Luftreifen (1) nach Anspruch 1, bei dem
ein jeder von Gürtel-Normallinienabstand (BL) und Laufflächen-Normallinienabstand (TL) in einem Bereich, dessen Breite 30 % bis 90 % der Breite des Kreuzungsbereiches (BHW) beträgt, konstant ist oder von der Reifenäquatorlinie (CL) in Richtung der Außenseite in der Laufflächenbreitenrichtung kürzer wird.

3. Luftreifen (1) nach Anspruch 1,

der außerdem eine Gürtelverstärkungslage (11) aufweist, die auf der Außenseite der zweiten Gürtellage (9B) in der radialen Richtung des Reifens vorhanden ist, wobei

ein Verstärkungslage-Normallinienabstand (RL) zwischen dem Laminierende (D) und der Reifenäquatorlinie (CL) konstant ist, wobei der Verstärkungslage-Normallinienabstand (RL) ein Abstand von der Gürtelverstärkungslage (11) zur äußeren Karkassenlinie (5C-1) auf der Normallinie ist.

**4.** Luftreifen nach Anspruch 1, bei dem

ein zurückgeklapptes Endstück (5b), das ein Endabschnitt der Karkassenlage (5) ist, der sich um den Wulstkern (3) dreht, in die Position entsprechend der maximalen Breite (M) des Reifens zurückgeklappt wird.

**5.** Luftreifen (1) nach Anspruch 1, bei dem

der Luftreifen ein Radialreifen ist, der auf einen Personenkraftwagen montiert ist.

**Revendications**

**1.** Bandage pneumatique (1), comprenant: des parties de talon appariées (3), englobant chacune au moins une tringle, (3a) et un bourrage sur tringle (3b) ; et au moins une couche de carcasse (5), une couche de ceinture (9) et une empreinte de contact au sol (13) agencée d'une partie interne vers une partie externe dans une direction radiale du bandage pneumatique (1), dans lequel

la couche de ceinture (9) englobe : une première couche de ceinture (9A), dans laquelle des premiers câblés (9a) sont agencés de manière oblique par rapport à une direction circonférentielle du bandage pneumatique ; et une deuxième couche de ceinture (9B), dans laquelle des deuxièmes câblés (9b) sont agencés de manière oblique par rapport à la direction circonférentielle du bandage pneumatique, et sont agencés de sorte à croiser les premiers câblés (9a) ;

une ligne de carcasse (5C) passant à travers le centre de la couche de carcasse (5), englobant une ligne de carcasse externe (5C-1), s'étendant d'une position (M) au niveau d'un côté externe dans la direction radiale du bandage pneumatique (1), où une largeur (TW) du bandage pneumatique (1) est maximale, le long d'une courbe de profil d'équilibre naturelle ayant une forme établie lorsqu'une tension appliquée à la couche de carcasse (5) est équilibrée, lorsque le bandage pneumatique (1), monté sur une jante standard, est gonflé à une pression interne standard, la courbe de profil d'équilibre naturelle s'étendant à l'intérieur de la courbe de profil d'équilibre simplifiée dans la direction radiale du bandage pneumatique ; et

chacune d'une distance de la ligne normale de la ceinture (BL), et d'une distance de la ligne normale de la bande de roulement (TL) dans une zone de croisement (BHW) est constante ou est réduite d'une ligne équatoriale du bandage pneumatique (CL) vers une partie externe dans une direction de la largeur de la bande de roulement, la distance de la ligne normale de la ceinture (BL) étant une distance entre la couche de ceinture (9) et la ligne de carcasse externe (5C-1) sur une ligne perpendiculaire à la ligne de carcasse (5C), la distance de la ligne normale de la bande de roulement (TL) étant une distance entre l'empreinte de contact au sol de la bande de roulement (13) et la ligne de carcasse externe (5C-1) sur la ligne normale, la zone de croisement (BHW) étant une zone dans laquelle la première couche de ceinture (9A) et la deuxième couche de ceinture (9B) se croisent mutuellement entre la ligne équatoriale du bandage pneumatique (CL) et une extrémité d'entaillage (D) ; et

une rainure dans la direction circonférentielle (15), s'étendant dans la direction circonférentielle du bandage pneumatique, étant formée dans la zone de croisement (BHW), dans un intervalle (R) représentant 60% à 80% de la largeur de la zone de croisement (BHW), à partir d'une extrémité de la zone de croisement (BHW).

**2.** Bandage pneumatique (1) selon la revendication 1, dans lequel

Chacune de la distance de la ligne normale de la ceinture (BL) et de la distance de la ligne normale de la bande de roulement (TL) est comprise dans un intervalle, dont la largeur représente 30% à 90% de la largeur de la zone de croisement (BHW), est constante ou est réduite de la ligne équatoriale du bandage pneumatique (CL) vers l'extérieur, dans la direction de la largeur de la bande de roulement.

**3.** Bandage pneumatique (1) selon la revendication 1,

comprenant en outre une couche de renforcement de la ceinture (11), agencée au niveau du côté externe de la deuxième couche de ceinture (9B), dans la direction radiale du bandage pneumatique, dans lequel

une distance de la ligne normale de la couche de renforcement (RL) est constante entre l'extrémité d'entaillage (D) et la ligne équatoriale du bandage pneumatique (CL), la distance de la ligne normale de la couche de renforcement (RL) étant une distance entre la couche de renforcement de la ceinture (11) et la ligne de carcasse externe (SC-1) sur la ligne normale.

**4.** Bandage pneumatique selon la revendication 1, dans lequel
une partie d'extrémité repliée vers l'arrière (5B), constituant une partie d'extrémité de la couche de carcasse (5) tournant autour de la tringle (3), est repliée vers l'arrière, vers la position correspondant à la largeur maximale du bandage pneumatique.

**5.** Bandage pneumatique (1) selon la revendication 1, dans lequel
le bandage pneumatique est un bandage pneumatique radial monté sur une voiture de tourisme.

# FIG. 1

# FIG. 2

## FIG. 3

## FIG. 4

# FIG. 5

EP 2 112 004 B1

## FIG. 6

## FIG. 7

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO5948204 A

- EP 0658450 A